# EUROPÄISCHE PATENTANMELDUNG

(11) **EP 4 375 220 A1**
(43) Veröffentlichungstag der Anmeldung: **29.05.2024**
(21) Anmeldenummer: 23205951.9
(22) Anmeldetag: 26.10.2023
(51) Int. Cl.: B65G 47/14, B29C 49/42

(54) **STEIGFÖRDERER ZUM FÖRDERN VON BEHÄLTERN**

(30) Priorität: 24.11.2022 DE 102022131128
(71) Anmelder: KHS GmbH, 44143 Dortmund (DE)
(72) Erfinder: Heller, Alexander, 22941 Bargteheide (DE)

(57) **Zusammenfassung**

Die Erfindung betrifft einen Steigförderer zum Fördern von Behältern, insbesondere von Vorformlingen (8), mit einer Vielzahl von Fördertaschen (5), welche entlang einer Förderspur (6, 10) in einer Förderrichtung (F) bewegbar sind und wobei die Fördertaschen (5) hintereinander an einem umlaufend angetriebenen Förderband (2) gebildet sind. Erfindungsgemäß sind zumindest zwei nebeneinander angeordnete Förderspuren (6, 10) vorgesehen, wobei die Fördertaschen (5) in den zumindest zwei Förderspuren (6, 10) versetzt zueinander in Förderrichtung (F) bewegbar sind.

## Beschreibung

Die vorliegende Erfindung betrifft einen Steigförderer zum Fördern von Behältern, insbesondere von Getränkebehältern, mit einer Vielzahl von Fördertaschen, welche entlang einer Förderspur in einer Förderrichtung bewegbar sind und wobei die Fördertaschen hintereinander an einem umlaufend angetriebenen Förderband gebildet sind. Bei den Behältern handelt es sich bevorzugt um Vorformlinge zur Herstellung von Behältern bzw. Getränkebehältern.

Derartige Steigförderer sind grundsätzlich aus dem Stand der Technik bekannt und dienen dazu, Behälter aus einem Sammelbehälter zu entnehmen und diese sodann auf eine vorbestimmte Höhe zu fördern. Entsprechend ist die Förderrichtung zumindest teilweise entlang einer vertikalen Richtung angeordnet, sodass die Behälter von einem ersten Höhenniveau auf ein zweites Höhenniveau gefördert werden können.

Hierbei bezieht sich die Erfindung insbesondere auf Steigförderer, welche im Bereich der Lebensmittelindustrie, insbesondere im Bereich der Getränkeindustrie, eingesetzt werden. Bei den Behältern kann es sich beispielsweise um Getränkeflaschen oder Getränkedosen handeln. Insbesondere ist jedoch vorgesehen, dass die Behälter als sogenannte Vorformlinge ausgebildet sind, welche üblicherweise auch als Preforms bezeichnet werden. Hierbei handelt es sich um Getränkebehälter, welche im Zuge einer Blasumformung zu Getränkeflaschen ausgebildet werden können. Entsprechend sind die Vorformlinge aus einem verformbaren Material gebildet. Hierbei handelt es sich insbesondere um Polyethylenterephthalat (PET).

Die Vorformlinge weisen einen bereits fertig ausgebildeten Kopfabschnitt bevorzugt mit einem mit einem Außengewinde versehenen Mündungsbereich auf. Über dieses Außengewinde kann eine Verschlusskappe aufgeschraubt werden. Entsprechend wird im Zuge der Blasumformung lediglich ein unterhalb des Kopfabschnittes angeordneter Bereich der Vorformlinge verformt.

Die Vorformlinge werden in einem Vorratsbehälter bereitgestellt und sodann üblicherweise über einen eingangs beschriebenen Steigförderer entnommen. Dieser Steigförderer ist Teil einer Zuführeinrichtung, in der die Vorformlinge entnommen, ausgerichtet und vereinzelt der Blasmaschine zugeführt werden. Innerhalb der Blasmaschine erfolgt die eigentliche Umformung. Darüber hinaus kann es auch vorgesehen sein, dass vor der Umformung eine Erwärmung der Vorformlinge in eine Heizvorrichtung erfolgt.

Die eingesetzten Steigförderer weisen üblicherweise ein Förderband auf, welches über eine Vielzahl hintereinander angeordneter Fördertaschen verfügt. Diese Fördertaschen sind zwischen jeweils zwei in Querrichtung angeordneten Stollen gebildet, wobei die Stollen vorspringende Abschnitte des Förderbandes darstellen, auf denen die Behälter aufliegen. Die Abstände der Stollen und damit die Höhe der Fördertaschen bestimmt insbesondere die Menge der Vorformlinge, welche innerhalb einer Fördertasche transportiert werden können.

Aufgrund der Ausgestaltung der Steigförderer werden die Behälter folglich nicht kontinuierlich den nachgeschalteten Einrichtungen zugeführt. Vielmehr erfolgt ein "schaufelweises" Aufbringen der Behälter, wobei sich die Menge der aufgebrachten Behälter einerseits an der Größe der Fördertasche aber auch anhand der Größe und des Materials der Behälter bestimmt. Entsprechend unterliegt der mit dem Steigförderer bewirkte Behälterdurchsatz gewissen Schwankungen. Darüber hinaus ist es erforderlich, dass die Fördertaschen verhältnismäßig groß ausgebildet sind, um einen ausreichend großen Behälterdurchsatz zu ermöglichen.

Dies hat jedoch zur Folge, dass bei den nachgeschalteten Einrichtungen die eingebrachte Menge von Behältern und damit auch deren Anordnung und Ausrichtung starke Schwankungen unterliegen. Üblicherweise schließt an den Steigförderer ein Rollensortierer an, in welchem die als Vorformlinge ausgebildeten Behälter ausgerichtet und hintereinander angeordnet werden. Durch eine große Anzahl von Vorformlingen pro Zeitabschnitt, deren Ausrichtung zudem stark schwankt, können die einzelnen Vorformlinge miteinander verhaken, wodurch der Betrieb innerhalb einer Blasanlage gestört wird.

Vor diesem Hintergrund liegt der Erfindung die Aufgabe zugrunde, einen Steigförderer anzugeben, welcher einerseits einen hohen Behälterdurchsatz ermöglicht und zugleich einen störungsfreien Betrieb ermöglicht.

Gegenstand und Lösung dieser Aufgabe ist ein Steigförderer gemäß Patentanspruch 1. Dementsprechend ist vorgesehen, dass zumindest zwei nebeneinander angeordnete Förderspuren vorgesehen sind, wobei die Fördertaschen in den zumindest zwei Förderstufen versetzt zueinander in Förderrichtung bewegbar sind.

Im Gegensatz zu den aus dem Stand der Technik bekannten Steigförderern werden die Behälter also nunmehr über zwei parallele Förderstufen entlang der Förderrichtung gefördert, wobei die Fördertaschen einer ersten Fördererspur zu den Fördertaschen einer zweiten Förderspur versetzt sind. Dies kann beispielsweise dadurch bewirkt werden, dass die die Fördertaschen bildenden Stollen versetzt in den zumindest zwei Fördererspuren angeordnet sind. Durch die Aufteilung auf zumindest zwei Förderspuren verteilen sich die zu fördernden Behälter auf die zumindest zwei Förderspuren, sodass im Zuge der schaufelweisen Förderung anstelle von größeren Behältermengen in größeren Zeitabständen kleinere Behältermengen in kleineren Zeitabständen gefördert werden können und somit der Behälterdurchsatz deutlich konstanter ist. Hierdurch ergibt sich ein gleichmäßigeres Einbringen der Behälter in die nachgeschaltete Einrichtung. Zugleich wird auch die Gefahr reduziert, dass die Behälter sich aufgrund von Fehlausrichtungen in der nachgeschalteten Einrichtung, zum Beispiel in einem Rollensortierer, verhaken.

Gemäß einer Ausgestaltung der Erfindung sind die Fördertaschen in den zumindest zwei Förderspuren an einem gemeinsamen Förderband gebildet. Gemäß einer solchen Ausgestaltung sind folglich die Fördertaschen in den Förderspuren allein durch die Ausbildung des Förderbandes festgelegt. Dies kann beispielsweise dadurch bewirkt werden, dass die Stollen in den beiden Fördererspuren in unterschiedlichen Positionen an dem Förderband gebildet werden. In diesem Zusammenhang ist anzumerken, dass das Förderband bevorzugt aus einem Kunststoff gebildet ist, sodass die Fördertaschen oder insbesondere auch die Stollen durch Ausformung des Förderbandes gebildet werden können.

Gemäß einer alternativen Ausgestaltung sind die Fördertaschen in einer ersten Förderspur an einem ersten Förderband und die Fördertaschen in einer zweiten Förderspur in einem zweiten Förderband gebildet. Entsprechend werden zwei separate Förderbänder vorgesehen, welche grundsätzlich hinsichtlich ihrer Ausgestaltung identisch ausgebildet werden können. Allein durch die Anordnung der Förderbänder wird dann ein entsprechender Versatz der Fördertaschen zueinander bewirkt.

Sofern zwei separate Förderbänder vorgesehen sind, können diese grundsätzlich über einen gemeinsamen Antrieb angetrieben werden. in einem solchen Fall wird die Position der Fördertaschen zwischen den einzelnen Förderbändern im Vorfeld festgelegt, sodass sich im Betrieb kein bzw. nur ein unwesentlicher zusätzlicher Versatz zwischen den beiden Förderbändern entstehen kann.

Gemäß einer alternativen Ausgestaltung können jedoch auch für beide Fördertaschen separate Antriebe vorgesehen sein, über welche der Versatz der Fördertaschen der beiden benachbarten Förderbänder variabel und automatisierbar einstellbar ist. Eine solche Ausgestaltung ist besonders flexibel einsetzbar, da die Fördertaschen je nach Größe der Behälter und je nach gewünschtem Behälterdurchsatz entweder erfindungsgemäß mit einem Versatz zueinander betrieben werden können oder aber auch eine synchrone Anordnung der Fördertaschen in den beiden Förderbändern ermöglicht wird.

Gemäß einer bevorzugten Ausgestaltung sind die Fördertaschen in den Förderspuren identisch ausgebildet. Mit einer identischen Ausbildung ist in diesem Zusammenhang gemeint, dass insbesondere die Fördertaschen eine identische Größe und identische Form aufweisen. Entsprechend können auch die Stollen in einem identischen Abstand zueinander angeordnet sein. Ausgehend von einer solchen Ausgestaltung sind dann bevorzugt die Fördertaschen um eine halbe Höhe der Fördertaschen zueinander versetzt. Dies ermöglicht einen möglichst konstanten Behälterdurchsatz.

Eine Weiterbildung der Erfindung sieht vor, dass das zumindest eine Förderband zwischen einer Behälteraufgabe und einem Behälterauswurf angeordnet ist, wobei die Förderspuren zumindest im Bereich der Behälteraufgabe über einen Steg voneinander getrennt sind. Die Behälteraufgabe weist hierbei einen Sammelbehälter auf, wobei die Fördertaschen an den in dem Sammelbehälter angeordneten Behältern vorbeigeführt werden, und wobei hierdurch eine bestimmte Anzahl von Behältern in die Fördertaschen gelangen. Insbesondere werden die Behälter durch die vorstehenden Stollen mitgerissen.

Gerade im ersten Bereich der Förderspur sind noch verhältnismäßig viele Behälter innerhalb einer Behältertasche angeordnet, welche im Zuge der Bewegung herunterfallen und zurück in den Sammelbehälter gelangen. Durch die versetzte Anordnung der Fördertaschen bzw. durch die versetzte Anordnung der Stollen zueinander ist es nunmehr möglich, dass die Behälter abwechselnd durch die Förderspuren entgegengesetzt zur Förderrichtung nach unten fallen, wobei die Behälter dann nicht zurück in den Sammelbehälter gelangen sondern in einen unterhalb des Sammelbehälters gelegenen Bereich. In diesem Bereich ist üblicherweise der Antrieb des zumindest einen Förderbandes angeordnet, sodass die Behälter dort ein Verklemmen des Förderbandes bzw. des Antriebes bewirken können. Durch die Einbindung eines Steges zwischen den einzelnen Förderspuren wird verhindert, dass die Behälter zumindest im Bereich der Behälteraufgabe von einer Spur in die andere Spur gelangen können.

Gegenstand der Erfindung ist ferner eine Blasanlage mit einer Blasmaschine und einer Zuführeinrichtungen zum Zuführen von Vorformlingen in die Blasmaschine gemäß Patentanspruch 9, wobei die Zuführeinrichtungen zumindest einen erfindungsgemäßen Steigförderer aufweist.

Eine Weiterbildung sieht vor, dass der Steigförderer über einen Behälterauswurf an ein Förderband anschließt, wobei der Behälterauswurf oberhalb des Förderbandes angeordnet ist. Das Förderband kann dann insbesondere oberhalb eines Rollensortierers enden. Die Behälter, insbesondere die Vorformlinge, fallen von dem Förderband in den Rollensortierer und werden dort ausgerichtet und hintereinander angeordnet.

Im Folgenden wird die Erfindung anhand von Zeichnungen näher erläutert. Es zeigen:
- Fig. 1, 2 und 3: einen Steigförderer gemäß dem Stand der Technik in verschiedenen Ansichten,
- Fig. 4: einen erfindungsgemäßen Steigförderer in einer Vorderansicht,
- Fig. 5A, 5B: einen Vergleich der Steigförderer gemäß Fig. 1 und Fig. 4 bezüglich deren Betriebsverhalten,
- Fig. 6: eine Detailansicht im Bereich der Behälteraufgabe bei einem Steigförderer gemäß der Fig. 4.

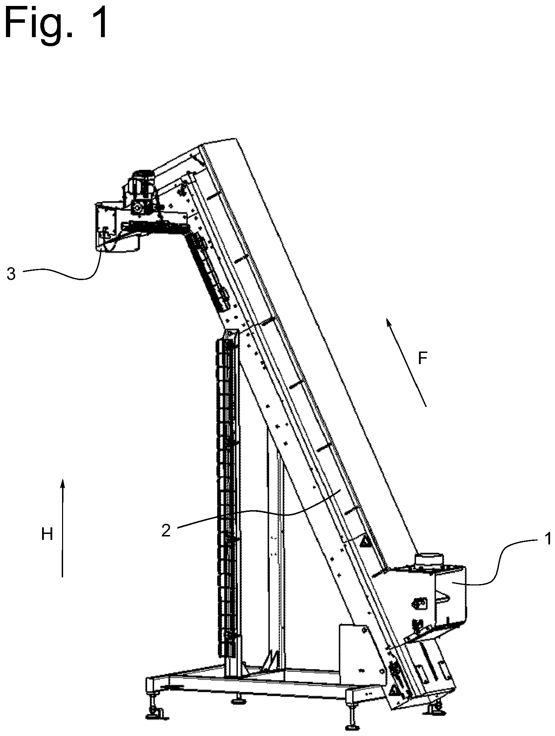

Die Fig. 1 zeigt einen Steigförderer gemäß dem Stand der Technik mit einem Förderband 2, welches Behälter zwischen einer Behälteraufgabe 1 und einem Behälterauswurf 3 entlang einer Förderrichtung F transportiert. Der Fig. 1 ist diesbezüglich zu entnehmen, dass die Förderrichtung F zumindest teilweise entlang einer Höhenrichtung H verläuft, sodass die Behälter zwischen zwei unterschiedlichen Höhenniveaus gefördert werden können.

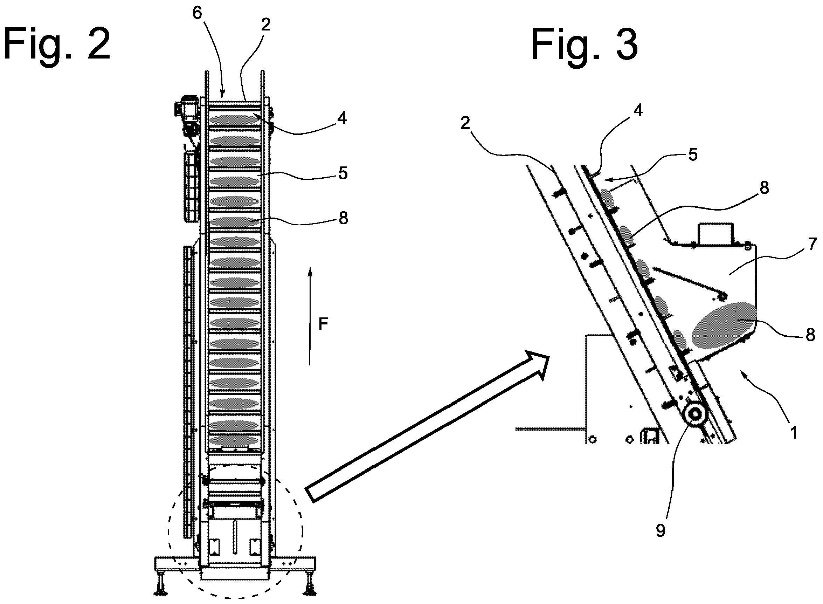

Die genaue Vorgehensweise lässt sich insbesondere anhand der Fig. 2 entnehmen. Demnach weist das Förderband 2 eine erste Förderspur 6 auf, wobei das Förderband 2 im Bereich der ersten Förderspur 6 mit einer Vielzahl hintereinander angeordneter Fördertaschen 5 ausgebildet ist. Jede Fördertasche 5 wird hierbei durch zwei Stollen 4 begrenzt, welche in Querrichtung zur Förderrichtung F angeordnet sind. Innerhalb dieser Fördertaschen 5 sammeln sich eine Vielzahl von Behälter, wobei es sich bei den Behältern gemäß der Fig. 2 um sogenannte Vorformlinge 8 handelt, welche im Rahmen einer Blasanlage zu Getränkeflaschen ausgebildet werden sollen. Entsprechend ist der dargestellte Steigförderer Teil einer solchen Blasanlage und dient dazu, bereits vorgefertigte Vorformlinge 8 einer Blasmaschine zuzuführen, wobei der Steigförderer lediglich ein Bestandteil einer größeren Zuführeinrichtung ist, welche beispielsweise auch einen Rollensortierer, Transportsterne oder dergleichen aufweisen kann.

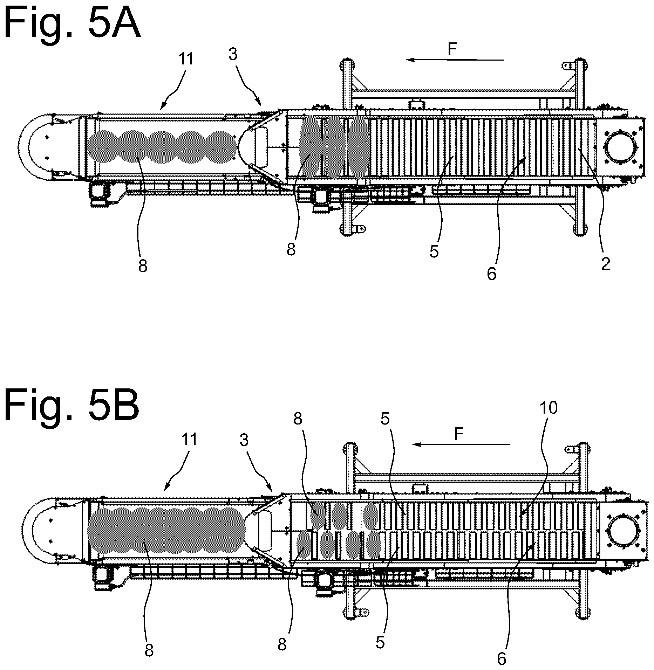

Die Vorformlinge 8 werden zunächst einer Behälteraufgabe 1 zugeführt, welche als eine Art Sammelbehälter 7 ausgebildet ist. Die Fördertaschen 5 werden an den in dem Sammelbehälter 7 angeordneten Vorformlingen 8 vorbeigeführt, wobei die Stollen 4 jeweils einen Teil der Vorformlinge 8 mitreißen, wobei sich die Menge der in den Fördertaschen 5 angeordneten Vorformlinge 8 zwischen den einzelnen Fördertaschen 5 unterscheiden kann. Entsprechend werden die Vorformlinge 8 den nachgeschalteten Einrichtungen "schaufelweise" zugeführt. Dies ist insbesondere in der Fig. 5A dargestellt. Durch das schaufelweise Einbringen der Vorformlinge 8 auf das nachgeschaltete Transportband 11 konzentrieren sich die Vorformlinge 8 auf einen mittigen Bereich. Zugleich bilden sich mehrere größere Anhäufungen von Vorformlingen 8 auf dem Förderband 11, sodass diese vergleichsweise diskontinuierlich gefördert und den nachgeschalteten Einrichtungen, z. B. einem Rollensortierer, zugeführt werden.

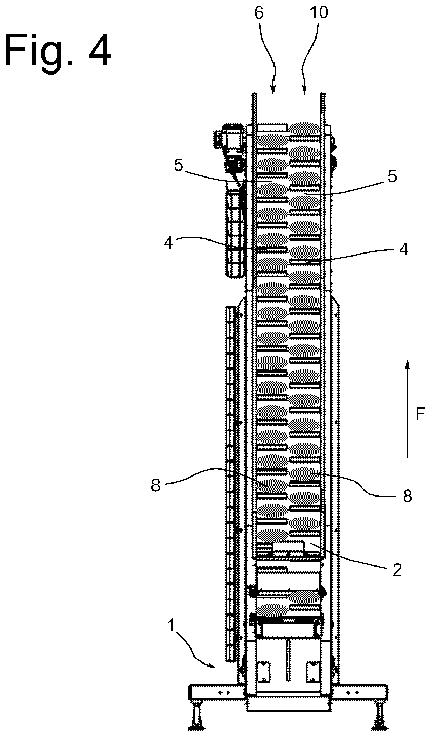

Die Fig. 4 zeigt in diesem Zusammenhang einen erfindungsgemäßen Steigförderer, wobei nunmehr zwei parallele Förderspuren 6, 10 vorgesehen sind und wobei die Fördertaschen 5 bzw. die Stollen 4 der ersten Förderspur 6 versetzt zu den Fördertaschen 5 bzw. den Stollen 4 der zweiten Förderspur 10 angeordnet sind. Die Fördertaschen 5 sind entsprechend kleiner ausgebildet als bei einem Steigförderer gemäß der Fig. 1, sodass sich eine geringere Anzahl von Vorformlingen 8 jeweils in den Fördertaschen 5 einsortiert. Gleichzeitig werden die Vorformlinge 8 in kürzeren Zeitabständen auf ein nachgeschaltetes Förderband 11 aufgebracht. Hierdurch ergibt sich eine gleichmäßigere Zuführung der Vorformlinge 8 sowie eine größere Auftragsbreite, welche insbesondere Fig. 5B deutlich entnommen werden kann.

Bei der Ausgestaltung gemäß der Fig. 4 sind die beiden Förderspuren 6, 10 an einem gemeinsamen Förderband 2 gebildet, sodass entsprechend lediglich ein Antrieb 9 vorgesehen ist, um beide Förderspuren 6, 10 zu betreiben. Alternativ ist es aber auch denkbar zwei separate Förderbänder 2 vorzusehen, welche entweder über einen gemeinsamen Antrieb 9 oder über separate Antriebe 9 angetrieben werden.

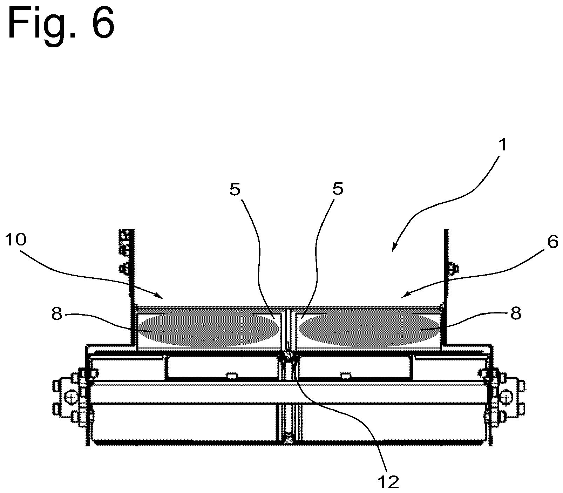

Wie der Fig. 6 entnommen werden kann, ist ferner im Bereich der Behälteraufgabe 1 ein Steg 12 zwischen den Förderspuren 6, 10 angeordnet, welcher verhindert, dass die Vorformlinge 8 von der ersten Förderspur 6 in die zweite Förderspur 10 oder umgekehrt gelangen können. Hierdurch wird verhindert, dass die Vorformlinge 8 in einen Bereich unterhalb der Behälteraufgabe 1 gelangen. Wäre dies der Fall, könnten die Vorformlinge 8 entweder durch Verklemmen den Betrieb stören oder gar den Antrieb 9 beschädigen.

### Bezugszeichenliste

- 1: Behälteraufgabe
- 2: Förderband
- 3: Behälterauswurf
- 4: Stollen
- 5: Fördertaschen
- 6: erste Förderspur
- 7: Sammelbehälter
- 8: Vorformlinge
- 9: Antrieb
- 10: zweite Förderspur
- 11: Förderband
- 12: Steg
- F: Förderrichtung
- H: Höhenrichtung

## Patentansprüche

1. Steigförderer zum Fördern von Behältern, insbesondere von Vorformlingen (8), mit einer Vielzahl von Fördertaschen (5), welche entlang einer Förderspur (6, 10) in einer Förderrichtung (F) bewegbar sind und wobei die Fördertaschen (5) hintereinander an einem umlaufend angetriebenen Förderband (2) gebildet sind,
**dadurch gekennzeichnet, dass**
zumindest zwei nebeneinander angeordnete Förderspuren (6, 10) vorgesehen sind, wobei die Fördertaschen (5) in den zumindest zwei Förderspuren (6, 10) versetzt zueinander in Förderrichtung (F) bewegbar sind.

2. Steigförderer nach Anspruch 1, **dadurch gekennzeichnet, dass** die Fördertaschen (5) in den zumindest zwei Förderspuren (6, 10) an einen gemeinsamen Förderband (2) gebildet sind.

3. Steigförderer nach Anspruch 1, **dadurch gekennzeichnet, dass** die Fördertaschen (5) in einer ersten Förderspur (6) an einem ersten Förderband (2) und die Fördertaschen (5) in einer zweiten Förderspur (10) an einem zweiten Förderband (2) gebildet sind.

4. Steigförderer nach Anspruch 3, **dadurch gekennzeichnet, dass** das erste und das zweite Förderband (11) über einen gemeinsamen Antrieb angetrieben werden.

5. Steigförderer nach einem der vorangegangenen Ansprüche, **dadurch gekennzeichnet, dass** die Fördertaschen (5) in den Förderspuren (6, 10) identisch ausgebildet sind.

6. Steigförderer nach einem der vorangegangenen Ansprüche, **dadurch gekennzeichnet, dass** die Fördertaschen (5) jeweils zwischen zwei hintereinander angeordneten Stollen (4) gebildet sind.

7. Steigförderer nach einem der vorangegangenen Ansprüche, **dadurch gekennzeichnet, dass** das zumindest eine Förderband (2) zwischen einer Behälteraufgabe (1) und einem Behälterauswurf (3) angeordnet ist, wobei die Förderspuren (6, 10) zumindest im Bereich der Behälteraufgabe (1) über einen Steg (12) voneinander getrennt sind.

8. Steigförderer nach einem der vorangegangenen Ansprüche, **dadurch gekennzeichnet, dass** die Fördertaschen (5) in den Förderspuren (6, 10) gleichmäßig zueinander versetzt sind.

9. Blasanlage mit einer Blasmaschine und einer Zuführeinrichtung zum Zuführen von Vorformlingen (8) in die Blasmaschine, wobei die Zuführeinrichtung zumindest einen Steigförderer nach einem der vorangegangenen Ansprüche aufweist.

10. Blasanlage nach Anspruch 9, **dadurch gekennzeichnet, dass** der Steigförderer über einen Behälterauswurf (3) an ein Förderband (2) anschließt, wobei der Behälterauswurf (3) oberhalb des Förderbandes (11) angeordnet ist.
